# EUROPEAN PATENT SPECIFICATION

(11) **EP 2 942 298 B1**
(45) Date of publication and mention of the grant of the patent: **06.06.2018**
(21) Application number: 15380016.4
(22) Date of filing: 24.04.2015
(51) Int. Cl.: B65B 43/46, B65B 61/28, B65G 47/90, B65G 47/91

(54) **LINE-CHANGING DEVICE FOR AN AUTOMATIC HORIZONTAL FLEXIBLE CONTAINER FORMING AND FILLING MACHINE**
LINIENWECHSELVORRICHTUNG FÜR EINE HORIZONTALE AUTOMATISCHE FORM- UND FÜLLMASCHINE FÜR FLEXIBLE BEHÄLTER
DISPOSITIF POUR CHANGER DE LIGNES D'UNE MACHINE AUTOMATIQUE HORIZONTALE DE FORMATION ET REMPLISSAGE DES RÉCIPIENTS FLEXIBLES

(30) Priority: 05.05.2014 ES 201430648
(43) Date of publication of application: 11.11.2015
(73) Proprietor: Mespack, S.L., 08130 Santa Perpètua de Mogoda (Barcelona) (ES)
(72) Inventor: Mora Flores, Francisco, 08100 Mollet del Vallès (Barcelona) (ES); Fité Sala, Menna, 08130 Santa Perpètua de Mogoda (Barcelona) (ES); Marti Roche, Enric, 08950 Esplugues de Llobregat (Barcelona) (ES)
(74) Representative: Juncosa Miro, Jaime

(56) References cited:
- EP-A1- 2 192 063
- EP-A1- 2 522 583
- US-A- 3 448 865
- US-A1- 2001 038 295

## Description

### Field of the Art

The present invention relates to a line-changing device for an automatic horizontal flexible container forming and filling machine comprising moving supports in which there are installed respective clamps gripping a group of flexible containers located in a first line and moving them to a second line higher than the first line, separating them from one another.

### Background of the Invention

Automatic horizontal container forming and filling machines are known essentially comprising a web feeding section feeding a web of flexible heat-seal film from a reel, a container forming section forming individual flexible containers from said web of flexible film, a filling section filling the individual flexible containers with one or more products, and a closing section closing the filled flexible containers and delivering them to an output conveyor.

In the container forming section, a continuous series of flexible containers is moved in a forward movement direction in a first horizontal line to a cutting station where the flexible containers are separated by means of cutting. A line-changing device grips a group of individual flexible containers in the cutting station and moves them to a second line corresponding to the filling section, where the second line is at a higher level than the first line and where the individual flexible containers are more separated from one another in the second line than in the first line.

Patent document ES 2255444 A1 describes a line-changing device of this type in which each clamp is installed at one end of a rocker arm having a runner coupled in a sliding manner to a swinging guide, and where all the swinging guides are operated by a swinging mechanism. Regulating means allow fixing the runners to the respective rocker arms at different distances from their rotating axes. Nevertheless, this construction is relatively complex and the regulating means make it difficult to establish a direct relationship between the position in which each runner is fixed to the corresponding rocker arm and the vertical and horizontal movements that the clamp supported thereon will experience.

Document ES 2392285 A1 discloses a transfer device applicable to an automatic packaging machine. The transfer device comprises two clamps supported in respective clamp supports which are movable along respective individual first horizontal guides arranged in first horizontal directions X parallel to a supply container line and fixed to respective individual guide supports which in turn are movable along respective vertical guides arranged in vertical directions Z and fixed to respective individual clamp-holding carriages which in turn are movable along respective second horizontal guides arranged in second horizontal directions Y perpendicular to the first horizontal directions and fixed to a fixed base support.

In the cited document ES 2392285 A, the clamp supports have respective cam followers coupled to respective cams arranged in upwards divergent directions and fixed to the corresponding individual clamp-holding carriages. Driving means move the clamp supports carrying the clamps, the guide supports, and the clamp-holding carriages along the respective first horizontal guides, vertical guides and second horizontal guides in individual combined trajectories in the three orthogonal directions X, Y, Z for transferring the containers from the supply container line to two mutually parallel lines of containers located at an upper level than the supply container line, with the containers in the two upper lines being more separated from one another than in the supply container line.

### Disclosure of the Invention

The object of the present invention is to solve or mitigate the foregoing and other drawbacks by providing a line-changing device for an automatic horizontal flexible container forming and filling machine comprising a plurality of clamps operated for moving between an open position and a closed position and installed on respective moving supports guided and operated for moving between a receiving position and a delivery position.

In said receiving position, the mentioned clamps are arranged for gripping a group of flexible containers located in a first line in a container forming section of the machine, and in said delivery position, the clamps are arranged for releasing said group of flexible containers in a second line in a container filling section of the machine, where the second line is at a higher level than said first line and the flexible containers are more separated from one another in the second line than in the first line. Thus, by means of suitably controlling the operators of the clamps and moving supports, the flexible containers are transferred from the first line to the second line.

The moving supports are coupled to two horizontal guides such that they can slide freely along same. Each of the moving supports has a cam follower coupled to a corresponding linear cam of a plurality of diverging linear cams fixed to a framing of the machine. The upper ends of these linear cams are more separated from one another than the lower ends. The mentioned two horizontal guides are fixed to a guide support attached to a lifting carriage guided and operated by an actuator for moving vertically in relation to the framing of the machine between a lower position corresponding to said first line and an upper position corresponding to said second line.

Therefore, when the lifting carriage is moved from the lower position to the upper position, the cam followers move along their corresponding linear cams, forcing the moving supports and the clamps installed thereon to move along the two horizontal guides and to separate from one another, resulting in an upward movement and at the same time a mutual separation movement of the clamps. When the lifting carriage is moved inversely from the upper position to the lower position, the moving supports and clamps installed therein experience inverse movements back to the initial position.

The line-changing device of the present invention preferably includes regulating means which allow regulating the inclination of each of the linear cams, which in turn regulates the differences between the separation distances between the clamps in the lower position and the separation distances between the clamps in the upper position.

In a particular embodiment, said regulating means comprise elongated holes formed in a fixed support fixed to said framing and fixing screws used for fixing the linear cams to said fixed support. The mentioned fixing screws are inserted through said elongated holes and through holes formed in the linear cams and screwed into corresponding nuts. Therefore, by loosening said nuts fixing screws can run along the length of the elongated holes to modify the inclination of the linear cams, and by tightening the nuts, the linear cams are fixed in the desired positions.

The number of clamps installed in the line-changing device of the present invention is four clamps in total. The four clamps are installed on four respective moving supports and the lifting carriage has two of said horizontal guides fixed thereto in mutually parallel positions.

Two of the moving supports are coupled to one of the horizontal guides by means of respective guide runners and the other two moving supports are coupled the other one of the horizontal guides by means of respective guide runners such that the guide runners do not get in the way of one another.

The lifting carriage has arms supporting the horizontal guides in front of the fixed support in which the linear cams are fixed, and the moving supports are inserted through a gap between the two horizontal guides. According to the invention, the moving supports have outer portions located in front of the horizontal guides on which clamps are supported and inner portions located between the horizontal guides and the fixed support on which cam followers are supported.

### Brief Description of the Drawings

The foregoing and other features and advantages will be better understood based on the following detailed description of a merely illustrative and non-limiting embodiment with reference to the accompanying drawings, in which:
Figure 1 is a perspective view of a line-changing device for an automatic horizontal flexible container forming and filling machine according to one embodiment of the present invention;
Figure 2 is a top view of the line-changing device of Figure 1;
Figure 3 is a side view of the line-changing device of Figure 1;
Figure 4 is a cross-section view taken along plane IV-IV of Figure 3;
Figure 5 is a front view of the line-changing device with the clamps in a receiving position for gripping flexible containers arranged in a first line; and
Figure 6 is a front view of the line-changing device with the clamps in a delivery position for releasing the flexible containers in a second line.

### Detailed Description of an Embodiment

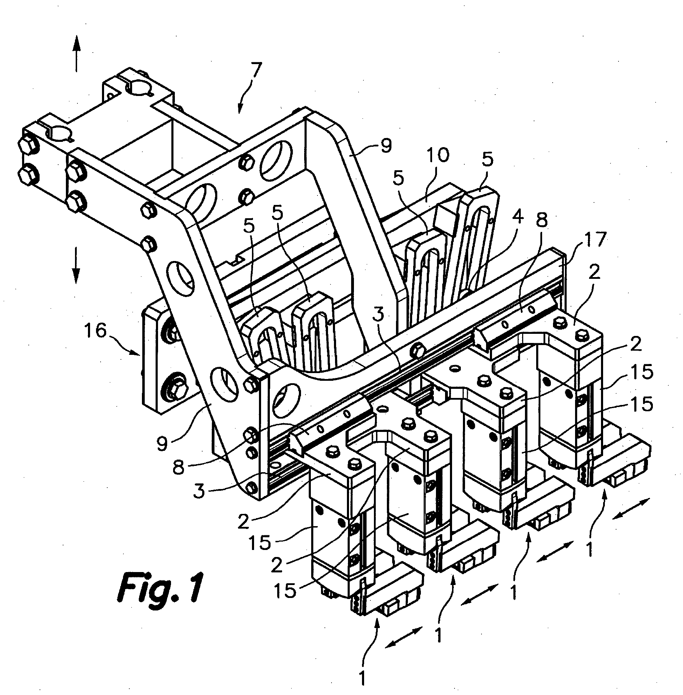

First in reference to Figures 1 to 4, there is shown a line-changing device for an automatic horizontal flexible container forming and filling machine according to one embodiment of the present invention which comprises a fixed support 10 fixed to a framing 6 of the machine through a support structure 16 and a lifting carriage 7 guided and operated by an actuator (not shown) for moving vertically in relation to said framing 6 between a lower position and an upper position.

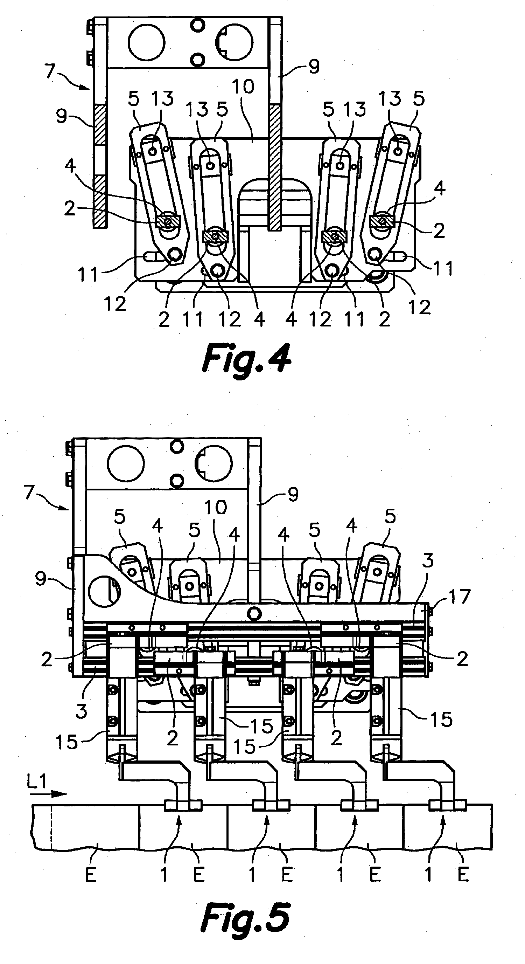

Four linear cams 5 (best shown in Figure 4) are fixed to the mentioned fixed support 10. These linear cams 5 are inclined in diverging directions and their upper ends are more separated from one another than their lower ends. The upper end of each linear cam 5 is connected to the fixed support by a corresponding fixing screw 13 and there are formed in the fixed support 10 elongated holes 11 on which lower ends of the linear cams 5 are superimposed. Fixing screws 12 screwed into respective nuts 14 are inserted through said elongated holes 11 and holes formed in the linear cams 5. The inclination of each of the linear cams 5 can be regulated by loosening the fixing screws 12, 13. The linear cams 5 can be fixed to the fixed support 10 with selected inclinations by tightening again the fixing screws 12, 13.

The mentioned lifting carriage 7 has arms 9 supporting a guide support 17 and two horizontal guides 3 are attached to said guide support 17. The arms 9 of the lifting carriage 7 are configured such that the two horizontal guides 3 are supported in front of the fixed support 10 and linear cams 5 fixed thereto. The guide support 17 comprises two support elements spaced apart from one another by a gap. The two horizontal guides 3 are spaced apart from one another by a gap in communication with the gap between the two support elements of the guide support 17.

Four moving supports 2 are inserted through said gap between the two horizontal guides 3. Two of said moving supports 2 are coupled by means of respective guide runners 8 to one of the two horizontal guides 3 such that they can slide freely along same, and the other two moving supports 2 are coupled by means of respective guide runners 8 to the other one of the two horizontal guides 3 such that they can slide freely along same.

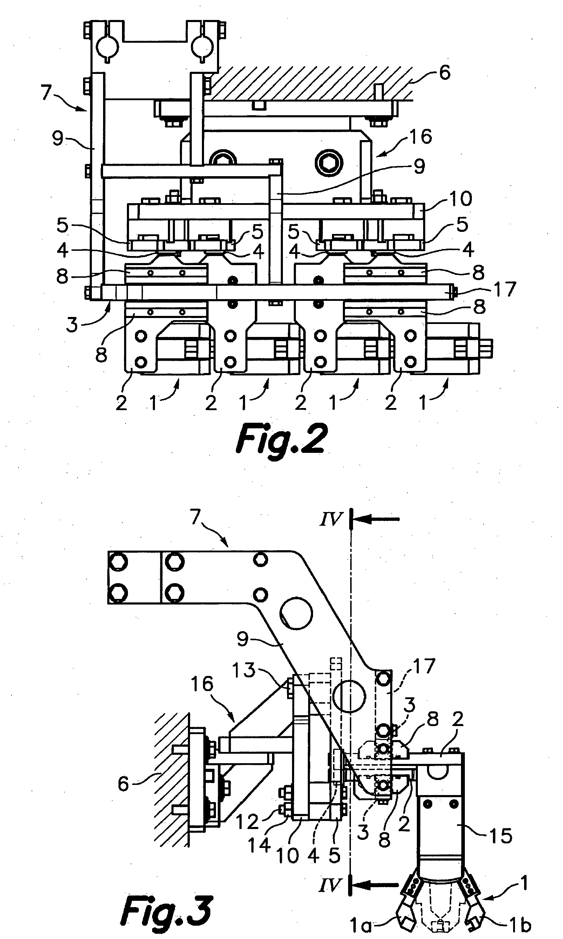

Each one of the moving supports 2 has an outer portion located in front of the horizontal guides 3 and an inner portion located between the horizontal guides 3 and the fixed support 10. The line-changing device includes four clamps 1, each fixed to the outer portion of one of the moving supports 2. Each clamp 1 comprises a pair of jaws la, lb (Figure 3) operated by an actuator 15 for moving between an open position (shown with continuous lines in Figure 3) and a closed position (shown with dashed lines in Figure 3). A cam follower 4 (best shown in Figure 4) is fixed to the inner portion of each moving support 2 and coupled to one of the linear cams 5.

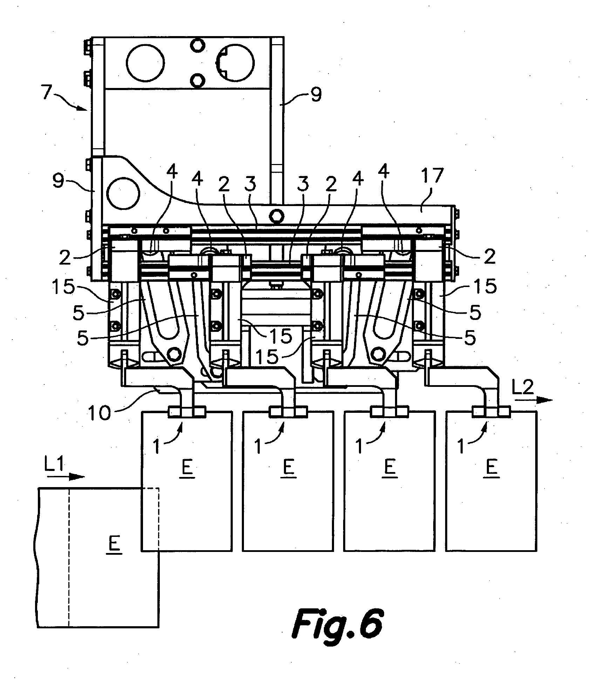

Operation of the line-changing device of the present invention is now described in relation to Figures 5 and 6.

As shown in Figure 5, flexible containers E in the form of a continuous series of flexible containers moved in a horizontal forward movement direction in a first line L1 reach a cutting station (not shown) located below the line-changing device. The lifting carriage 7 is then downwardly operated for being arranged in a lower position, whereby the moving supports 2 are placed in a receiving position and the clamps 1 are arranged for gripping the first four flexible containers E of the continuous series.

In this lower position (Figure 5), clamps 1 are operated to the closed position and grip the flexible containers E. While the flexible containers E are gripped, the cutting station cuts the continuous series to separate the first four flexible containers E, and the lifting carriage 7 is then upwardly operated until being arranged in an upper position (Figure 6) corresponding to a second line L2.

During movement of the lifting carriage 7 from the lower position (Figure 5) to the upper position (Figure 6), the cam followers 4 move along their corresponding linear cams 5 and due to the inclination thereof, they force the moving supports 2 and clamps 1 installed therein to move along the horizontal guides 3, whereby the clamps 1 which have gripped respective flexible containers E are separated from one another while moving upwardly at the same time. Accordingly, the second line L2 is at a higher level than the first line L1 and the flexible containers E are more separated from one another in the second line L2 than in the first line L1.

In the upper position shown in Figure 6, the moving supports 2 are in a delivery position and the clamps 1 are operated to the open position for releasing the four flexible containers E. In this position, the flexible containers E are transferred to a conveyor device (not shown) which will move the flexible containers E along the second line L2 in a container filling section of the machine.

When the lifting carriage 7 is then moved from the upper position (Figure 6) to the lower position (Figure 5), the cooperation of cam followers 4 with the linear cams 5 forces the moving supports 2 and clamps 1 to move along the horizontal guides 3 to get again closer to one another.

The line-changing device of the present invention therefore comprises a simple and reliable mechanism, has regulating means (elongated holes 11 and fixing screws 12) for regulating the increase in separation between the flexible containers E in the second line L2 with respect to the first line L1, and is operated by a single actuator (operation of the lifting carriage 7).

The means used for guiding and operating the movements of the lifting carriage 7 can be any means commonly used in the art in this field to move a carriage in relation to a framing in a guided manner. Guide rails or bars fixed to the framing in cooperation with guide runners fixed to the carriage and coupled to the rails or bars can be mentioned as guiding means, for example. A linear actuator, such as for example a pneumatic cylinder or an electric motor in cooperation with a nut and screw drive or a rack and pinion drive, etc., could be used as operating means.

In another embodiment which does not form part of the invention, a plurality of moving supports carrying respective clamps are all coupled to a single horizontal guide attached to a single guide support fixed to the lifting carriage. Each of the moving supports has a cam follower coupled to a corresponding cam of a plurality of cams fixed to the framing of the machine, with upper ends of the cams being more separated from one another than lower ends thereof. The lifting carriage is guided and operated for moving vertically in relation to the framing between a lower position corresponding to the first line and an upper position corresponding to the second line.

In still another embodiment (not shown), the cams are non-linear cams having upper ends more separated from one another than lower ends thereof. Preferably, regulating means are provided for regulating the position of each of the non-linear cams with respect to the framing. These regulating means can be, for example, analogous to the regulating means described above in relation to the embodiment shown in Figs. 1 to 5.

The scope of the present invention is defined in the attached claims.

## Claims

1. A line-changing device for an automatic horizontal flexible container forming and filling machine, comprising a plurality of clamps (1) operated for moving between an open position and a closed position, and installed on respective moving supports (2) guided and operated for moving between a receiving position, in which said clamps (1) are arranged for gripping a group of flexible containers (E) located in a first line (L1) in a container forming section of the machine, and a delivery position, in which the clamps (1) are arranged for releasing said group of flexible containers in a second line (L2) in a container filling section of the machine, where said second line (L2) is at a higher level than said first line (L1) and where the flexible containers (E) are more separated from one another in the second line (L2) than in the first line (L1), wherein said moving supports (2) are coupled to at least one horizontal guide (3) such that they can slide freely along same, each of the moving supports (2) has a cam follower (4) coupled to a corresponding cam (5) of a plurality of cams (5) fixed to a framing (6) of the machine, upper ends of said cams (5) being more separated from one another than lower ends thereof, and said at least one horizontal guide (3) is fixed to a lifting carriage (7) guided and operated for moving vertically in relation to said framing (6) between a lower position corresponding to said first line (L1) and an upper position corresponding to said second line (L2), **characterized by** comprising four of said clamps (1) installed on four respective moving supports (2), and two of said horizontal guides (3) fixed to said lifting carriage (7), where two of the moving supports (2) are coupled to one of the horizontal guides (3) by means of respective guide runners (8) and the other two moving supports (2) are coupled to the other one of the horizontal guides (3) by means of respective guide runners (8), wherein the lifting carriage (7) has arms (9) supporting the horizontal guides (3) in front of a fixed support (10) in which the linear cams (5) are fixed, and the moving supports (2) are inserted through a gap between the two horizontal guides (3), where the clamps (1) are supported on outer portions of the moving supports (2) located in front of the horizontal guides (3) and the cam followers (4) are supported on inner portions of the moving supports (2) located between the horizontal guides (3) and said fixed support (10).

2. The line-changing device according to claim 1, **characterized by** comprising a plurality of said guides (3).

3. The line-changing device according to claim 1 or 2, **characterized in that** said cams (5) are linear cams (5).

4. The line-changing device according to claim 1, 2 or 3, **characterized by** comprising regulating means for regulating the inclination of each of the cams (5).

5. The line-changing device according to claim 4, **characterized in that** said regulating means comprise elongated holes (11) formed in the fixed support (10) which is fixed to the framing (6) and fixing screws (12) inserted through said elongated holes (11) and holes formed in the linear cams (5) to fix the linear cams (5) to said fixed support (10).

6. The line-changing device according to claim 5, **characterized in that** said two horizontal guides (3) are attached to a guide support (17) supported on said arms (9) of the lifting carriage (7), said guide support (17) comprising two support elements spaced apart from one another by a gap in communication with the gap between the two horizontal guides (3).

## Patentansprüche

1. Linienwechselvorrichtung für eine horizontale automatische Form- und Füllmaschine für flexible Behälter, umfassend eine Vielzahl von Klemmen (1), welche betätigt werden, um sich zwischen einer offenen Stellung und einer geschlossenen Stellung zu bewegen, und auf jeweiligen beweglichen Stützen (2) installiert sind, welche geführt und betätigt werden, um sich zwischen einer Empfangsstellung, in welcher die genannten Klemmen (1) dazu angeordnet sind, eine Gruppe von flexiblen Behältern (E) zu greifen, welche sich ein einer ersten Linie (L1) in einem Behälterformabschnitt der Maschine befinden, und einer Übergabestellung, in welcher die Klemmen (1) dazu angeordnet sind, die genannte Gruppe von flexiblen Behältern in einer zweiten Linie (L2) in einem Behälterfüllabschnitt der Maschine freizusetzen, zu bewegen, wobei die genannte zweite Linie (L2) auf einer höheren Ebene als die genannte erste Linie (L1) liegt und wobei die flexiblen Behälter (E) in der zweiten Linie (L2) weiter voneinander getrennt sind als in der ersten Linie (L1), wobei die genannten beweglichen Stützen (2) mindestens mit einer horizontalen Führung (3) gekoppelt sind, so dass sie entlang derselben frei gleiten können, wobei jede der beweglichen Stützen (2) einen Nockenstößel (4) aufweist, welcher mit einem entsprechenden Nocken (5) einer Vielzahl von Nocken (5), welche an einem Rahmen (6) der Maschine befestigt sind, gekoppelt ist, wobei die oberen Enden der genannten Nocken (5) weiter voneinander getrennt sind als die unteren Enden derselben, und wobei die genannte mindestens eine horizontale Führung (3) an einem Hubwagen (7) befestigt ist, welcher geführt und betätigt wird, um sich vertikal in Bezug auf den genannten Rahmen (6) zwischen einer unteren Stellung, welche der genannten ersten Linie (L1) entspricht, und einer oberen Stellung, welche der genannten zweiten Linie (L2) entspricht, zu bewegen, **dadurch gekennzeichnet, dass** sie vier der genannten Klemmen (1), auf vier jeweiligen beweglichen Stützen (2) installiert, und zwei der genannten horizontalen Führungen (3), am genannten Hubwagen (7) befestigt, umfasst, wobei zwei der beweglichen Stützen (2) mit einer der horizontalen Führungen (3) mittels jeweiliger Führungskufen (8) gekoppelt sind und die anderen zwei beweglichen Stützen (2) mit der anderen der horizontalen Führungen (3) mittels jeweiliger Führungskufen (8) gekoppelt sind, wobei der Hubwagen (7) Arme (9) aufweist, welche die horizontalen Führungen (3) vor einer befestigten Stütze (10), in welcher die linearen Nocken (5) befestigt sind, stützen, und die bewegliche Stützen (2) durch einen Spalt zwischen den zwei horizontalen Führungen (3) eingeführt sind, wobei die Klemmen (1) auf äußeren Teilen der beweglichen Stützen (2) gestützt sind, welche sich vor den horizontalen Führungen (3) befinden, und die Nockenstößel (4) auf inneren Teilen der beweglichen Stützen (2) gestützt sind, welche sich zwischen den horizontalen Führungen (3) und der genannten befestigten Stütze (10) befinden.

2. Linienwechselvorrichtung nach Anspruch 1, **dadurch gekennzeichnet, dass** sie a Vielzahl von den genannten Führungen (3) umfasst.

3. Linienwechselvorrichtung nach Anspruch 1 oder 2, **dadurch gekennzeichnet, dass** die genannten Nocken (5) lineare Nocken (5) sind.

4. Linienwechselvorrichtung nach Anspruch 1, 2 oder 3, **dadurch gekennzeichnet, dass** sie Regulierungsmittel zum Regulieren der Neigung jedes der Nocken (5) umfasst.

5. Linienwechselvorrichtung nach Anspruch 4, **dadurch gekennzeichnet, dass** die genannten Regulierungsmittel längliche Löcher (11), welche in einer befestigten Stütze (10) gebildet sind, welche am Rahmen (6) befestigt ist, und Befestigungsschrauben (12), welche durch die genannten länglichen Löcher (11) eingeführt sind, und Löcher, welche in den linearen Nocken (5) gebildet sind, um die linearen Nocken (5) an der genannten befestigten Stütze (10) zu befestigen, umfassen.

6. Linienwechselvorrichtung nach Anspruch 5, **dadurch gekennzeichnet, dass** die genannten zwei horizontalen Führungen (3) mit einer Führungsstütze (17) verbunden sind, welche auf den genannten Armen (9) des Hubwagens (7) gestützt ist, wobei die genannte Führungsstütze (17) zwei Stützelemente umfasst, welche voneinander durch einen Spalt getrennt sind, welcher mit dem Spalt zwischen den zwei horizontalen Führungen (3) in Verbindung ist.

## Revendications

1. Un dispositif pour le changement de ligne pour une machine pour former et remplir un récipient flexible horizontal, comportant une pluralité d'étaux (1) actionnés pour se déplacer entre une position ouverte et une position fermée et installés sur des supports mobiles respectifs (2) guidés et actionnés pour se déplacer entre une position de réception, dans laquelle ces étaux (1) sont aménagés pour saisir un groupe de récipients flexibles (E) situés sur une première ligne (L1) dans un récipient formant une section de la machine et une positon de distribution, dans laquelle les étaux (1) sont aménagés pour délivrer ce groupe de récipients flexibles sur une deuxième ligne (L2) dans une section de remplissage de récipient de la machine, où cette deuxième ligne (L2) est à un plus haut niveau que cette première ligne (L1) et où les récipients flexibles (E) sont plus écartés les uns des autres sur la deuxième ligne (L2) que sur la première ligne (L1),où ces supports mobiles (2) sont couplés à au moins une glissière horizontale (3) de sorte qu'ils puissent y glisser librement tout le long, chacun de ces supports mobiles (2) possède un suiveur de came (4) couplé à une came correspondante (5) d'une pluralité de cames (5) fixées sur un châssis (6) de la machine, les extrémités supérieures de ces cames (5) étant plus écartées entre elles que leurs extrémités inférieures et cette au moins une glissière horizontale (3) est fixée sur un chariot de levage (7) guidé et actionné pour son déplacement vertical par rapport à ce châssis (6) entre une position inférieure correspondant à cette première ligne (L1) et une position supérieure correspondant à cette deuxième ligne (L2), **caractérisé en ce qu'**il comporte quatre de ces étaux (1) installés sur quatre supports mobiles respectifs (2) et deux de ces glissières horizontales (3) fixées sur ce chariot de levage (7) , où deux des supports mobiles (2) sont couplés à une des glissières horizontales (3) au moyen de coulisseaux de guidage (8) respectifs et les deux autres supports mobiles (2) sont couplés à l'autre des glissières horizontales (3) au moyen de coulisseaux de guidage respectifs (8), où le chariot de levage (7) possède des bras (9) supportant les glissières horizontales (3) en face d'un support fixe (10) sur lequel les cames linéaires (5) sont fixées et les supports mobiles (2) sont insérés à travers un écartement entre les deux glissières horizontales (3) où les étaux (1) sont supportés sur des portions extérieures des supports mobiles (2) situés en face des glissières horizontales (3) et les suiveurs de came (4) sont supportés sur des portions intérieures des supports mobiles (2) situés entre les glissières horizontales (3) et ce support fixe (10).

2. Le dispositif pour le changement de ligne conformément à la revendication 1, **caractérisé en ce qu'**il comporte une pluralité de ces glissières (3).

3. Le dispositif pour le changement de ligne conformément à la revendication 1 ou 2, **caractérisé en ce que** ces cames (5) sont des cames linéaires (5).

4. Le dispositif pour le changement de ligne conformément à la revendication 1, 2 ou 3, **caractérisé en ce qu'**il comporte des moyens de régulation pour réguler l'inclinaison de chacune des cames (5).

5. Le dispositif pour le changement de ligne conformément à la revendication 4, **caractérisé en ce que** ces moyens de régulation comportent des trous oblongs (11) formés sur le support fixe (10) qui est fixé sur le châssis (6) et des vis de fixation (12) insérées à travers ces trous oblongs (11) et les trous formés sur les cames linéaires (5) pour fixer les cames linéaires (5) sur ce support fixe (10).

6. Le dispositif pour le changement de ligne conformément à la revendication 5, **caractérisé en ce que** ces deux glissières horizontales (3) sont attachées à un support de guidage (17) supporté sur ces bras (9) du chariot de levage (7), ce support de guidage (17) comportant deux éléments de support séparés par un écartement communiquant avec l'écartement entre les deux glissières horizontales (3).
